# EUROPÄISCHE PATENTSCHRIFT

(11) **EP 1 300 308 B1**
(45) Veröffentlichungstag und Bekanntmachung des Hinweises auf die Patenterteilung: **10.12.2008**
(21) Anmeldenummer: 02022069.5
(22) Anmeldetag: 02.10.2002
(51) Int. Cl.: B60T 8/18, B60T 13/26, B60T 11/32, B60T 17/18

(54) **Verfahren zum Betrieb einer druckluftbetriebenen Bremsanlage eines Fahrzeugverbandes sowie Zugfahrzeug mit druckluftbetriebener Bremsanlage**
Process for the command of a brake system with compressed-air in a tractor-trailer system
Procédé de commande d'un système de freinage à air comprimé dans un ensemble tracteur-remorque

(30) Priorität: 04.10.2001 DE 10148968
(43) Veröffentlichungstag der Anmeldung: 09.04.2003
(73) Patentinhaber: BPW Bergische Achsen Kommanditgesellschaft, 51674 Wiehl (DE)
(72) Erfinder: Pittius, Reinhold, 74564 Crailsheim (DE)
(74) Vertreter: Christophersen, Ruth

(56) Entgegenhaltungen:
- EP-A- 0 157 945
- EP-A- 0 659 623
- DE-A1- 2 620 135

## Beschreibung

Die Erfindung betrifft zunächst ein Verfahren zum Betrieb einer druckluftbetriebenen Bremsanlage eines Fahrzeugverbandes aus einem Zugfahrzeug und einem hieran angekoppelten Anhängerfahrzeug, dessen Druckluftsystem über eine Druckluft-Versorgungsleitung mit dem Druckluftsystem des Zugfahrzeuges verbunden ist.

Ferner betrifft die Erfindung ein Zugfahrzeug mit einer druckluftbetriebenen Bremsanlage, die über eine Druckluft-Versorgungsleitung mit einem Druckluftsystem eines an das Zugfahrzeug ankoppelbaren Anhängerfahrzeuges verbindbar ist.

DE 2 620 135 offenbart einen Druckbegrenzer für eine Druckluftbremsanlage und wird als nächstliegende Stand der Technik ausgesehen.

Lastkraftwagen des Mittel- und Schwerlastbereiches werden fast ausschließlich mit druckluftbetriebenen Bremssystemen ausgestattet. Die Erzeugung der Druckluft mittels eines Kompressors erfolgt regelmäßig im Zugfahrzeug, von dem eine Versorgungsleitung zu dem angekoppelten Anhängerfahrzeug geführt ist, so daß auch im Anhängerfahrzeug die Betätigung der dort vorhandenen Trommel- oder Scheibenbremsen pneumatisch erfolgt.

In den letzten Jahren sind die Hersteller von Zugfahrzeugen dazu übergegangen, den Betriebsdruck des Druckluftsystems von den ursprünglich verwendeten 8,5 bar auf 10 bar, teilweise sogar bereits auf 12 bar anzuheben. Hingegen werden Anhängerfahrzeuge ausschließlich mit einem Betriebsdruck von 8,5 bar betrieben. Entsprechend ist in der vom Zugfahrzeug zu dem Anhängerfahrzeug führenden Druckluft-Versorgungsleitung ein Reduzierventil bzw. eine Drossel installiert, welche den im Zugfahrzeug herrschenden Betriebsdruck von z. B. 10 bar auf den für den Betrieb des Anhängers zulässigen Betriebsdruck von 8,5 bar reduziert. Von den grundsätzlichen Vorteilen des bei modernen. Zugfahrzeugen bereits durchgesetzten höheren Betriebsdruckes vermag das Anhängerfahrzeug daher nicht zu profitieren.

Der Erfindung liegt die Aufgabe zugrunde, bei Fahrzeugkombinationen aus Zugfahrzeug und gezogenem Fahrzeug die Kompatibilität in Bezug auf die druckluftbetätigten Bremssysteme zu verbessern.

Zur Lösung dieser Aufgabe wird bei einem Betriebsverfahren der eingangs genannten Art vorgeschlagen, daß der Druck in der Druckluft-Versorgungsleitung auf einen ersten festen sowie mindestens einen zweiten festen Druckwert einstellbar ist, daß Mittel zur Identifizierung des Anhängerfahrzeuges vorhanden sind, und daß der Druckwert in der Druckluft-Versorgungsleitung von dem Ergebnis der Identifizierung abhängt.

Durch Anwendung dieses Verfahrens wird die Kompatibilität von Fahrzeugkombinationen aus Zugfahrzeug und gezogenem Fahrzeug auch in solchen Fällen sichergestellt, in denen nicht nur die Bremsanlage des Zugfahrzeuges, sondern auch jene des Anhängerfahrzeuges auf einem höheren Druckniveau betrieben wird, als dies bisher Stand der Technik ist. Dies gilt insbesondere für Anhängerfahzeuge, die bisher nur mit dem konventionellen Vorratsdruck von 8,5 bar betrieben werden konnten. Das erfindungsgemäße Verfahren ermöglicht einen Betrieb des Anhängers mit einer Hochdruck-Bremsanlage mit einem Systemdruck von z. B. 10 bar.

In besonders einfacher Ausgestaltung des Verfahrens kann die Identifizierung des Anhängerfahrzeuges durch eine Steckverbindung erfolgen, welche Steckverbindung das Druckluftsystem des Anhängerfahrzeuges mit dem Druckluftsystem des Zugfahrzeuges verbindet. Z. B. können mindestens zwei voneinander verschiedene Anschlußstecker am Zugfahrzeug vorhanden sein, wobei der Druck in den Zuleitungen der Anschlußstecker unterschiedlich ist. Durch Verbinden des Steckers des Anhängers entweder mit dem einen oder dem anderen Gegenstecker am Zugfahrzeug erfolgt die Identifizierung des Anhängerfahrzeuges und wird entschieden, ob das Druckluftsystem in dem Anhängerfahrzeug auf einem höheren, oder auf einem niedrigeren Druckniveau arbeitet.

Nach der Erfindung wird ein Verfahren vorgeschlagen, bei dem das Anhängerfahrzeug durch das Zugfahrzeug identifiziert wird, und eine Einstellung des Druckwertes in der Druckluft-Versorgungsleitung in Abhängigkeit von dem Ergebnis der Identifizierung erfolgt. Ein solches Betriebsverfahren eignet sich insbesondere für solche Fahrzeugkombinationen, bei denen sowohl das Zugfahrzeug wie auch das Anhängerfahrzeug mit sogenannten EBS-Systemen (elektronische Bremsen- Steuerung) versehen sind. Sind die Fahrzeuge mit derartigen Systemen ausgestattet, kann grundsätzlich wie folgt vorgegangen werden: Die EBS-Anlage des Anhängerfahrzeuges sendet eine Identifikation an die EBS-Anlage des Zugfahrzeuges, woraufhin die EBS-Anlage des Zugfahrzeuges das so identifizierte Anhängerfahrzeug mit einem höheren Versorgungsdruck von z. B. 10 bar in der vom Zug- zum Anhängerfahrzeug führenden Druckluft-Versorgungsleitung beaufschlagt. Die Anhängerfahrzeuge mit einer Hochdruck-Bremsanlage werden technisch so ausgelegt, daß sie auch in Kombination mit alten Zugfahrzeugen, z. B. Zugfahrzeugen mit einem Systemdruck von 8,5 bar, noch die gesetzlichen Mindestanforderungen an die Abbremsung erfüllen.

Mit einer bevorzugten Ausgestaltung des Betriebsverfahrens wird vorgeschlagen, daß die Identifikation anhand eines Identifikationssignals erfolgt, das zwischen einer Bremsen-Steuereinrichtung (z.B. EBS) in dem Zugfahrzeug und einer weiteren Bremsen-Steuereinrichtung (z. B. EBS) in dem Anhängerfahrzeug übermittelt wird.

Im Rahmen des beanspruchten Verfahrens ist es nicht erforderlich, daß das angekoppelte Anhängerfahrzeug ungeachtet des Umstandes, ob es sich um ein Anhängerfahrzeug mit niedrigem oder hohem Druckluftniveau handelt, jeweils ein Identifikationssignal aussendet. Es ist bereits ausreichend, wenn sich Anhängerfahrzeuge, die auf das höhere Druckniveau ausgelegt sind, entsprechend identifizieren, so daß umgekehrt im Falle des Ausbleibens eines entsprechenden Identifikationssignals darauf geschlossen werden kann, daß das angekoppelte Anhängerfahrzeug auf dem niedrigeren Druckniveau betrieben werden muß. Entsprechend wird mit einer Ausgestaltung des Verfahrens vorgeschlagen, daß im Falle des Eintreffens eines Identifiaktionssignals im Zugfahrzeug der höhere Druckwert, und im Falles des Ausbleibens eines Identifikationssignals der niedrigere Druckwert eingestellt wird.

Zur Lösung der vorgenannten Aufgabenstellung wird ferner ein Zugfahrzeug nach Anspruch 5 vorgeschlagen.

Die vorgenannten Mittel zur wahlweisen Festlegung des Drucks in der Druckluft-Versorgungsleitung können z. B. aus mindestens zwei voneinander verschiedenen Anschlußsteckern bestehen, wobei der Druck in den Zuleitungen der Anschlußstecker unterschiedlich ist.

Alternativ können die Mittel zur wahlweisen Festlegung des Drucks in der Druckluft-Versorgungsleitung Umschaltmittel sein, mit denen der Druck in der Druckluft-Versorgungsleitung auf zwei unterschiedliche Werte einstellbar ist.

Mit einer Ausgestaltung des erfindungsgemäßen Zugfahrzeuges wird schließlich vorgeschlagen, daß dieses mit einer Bremsen-Steuereinrichtung (z. B. EBS) versehen ist, die über eine Signalleitung mit einer Bremsen-Steuereinrichtung (z. B. EBS) des Anhängerfahrzeuges verbindbar ist, und daß die Identifikation des Anhängerfahrzeuges durch ein Identifikationssignal in der Signalleitung erfolgt.

Die Erfindung wird nachfolgend anhand der beigefügten Zeichnungen näher erläutert. Die Zeichnung zeigt in stark schematischer Darstellung zwei Ausführungsbesispiele einer Fahrzeugkombination bestehend aus Zugfahrzeug und gezogenem Fahrzeug einschließlich einer schematischen Darstellung der Druckluftsysteme sowie der Systeme einer elektronischen Bremsen-Steuerung. Hierbei zeigen
- Fig. 1: eine erste Ausführungsform einer solchen Fahrzeugkombination und
- Fig. 2: eine zweite Ausführungsform einer solchen Fahrzeugkombination.

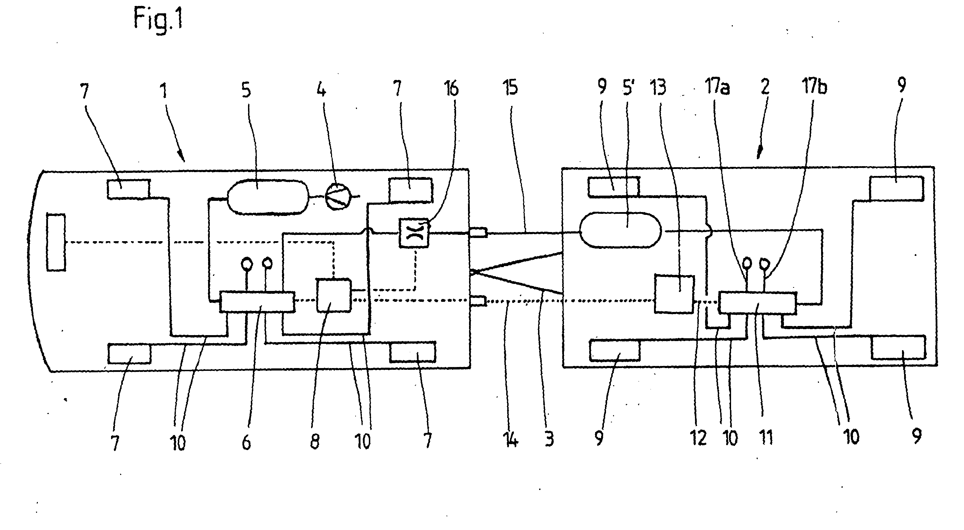

In Fig. 1 ist ein LKW-Zugfahrzeug 1 dargestellt, an welches ein LKW-Anhängerfahrzeug 2 mittels einer üblichen Deichsel 3 angekoppelt ist. Bei dem Anhängerfahrzeug 2 kann es sich auch um einen Sattelschlepper-Auflieger handeln, der mit dem angetriebenen Zugfahrzeug 1 verbunden ist.

Sowohl Zugfahrzeug 1 wie auch Anhängerfahrzeug 2 sind mit Druckluftsystemen ausgestattet. Der Kompressor 4 zur Erzeugung der Druckluft befindet sich im Zugfahrzeug 1 und wird vorzugsweise von dessen Antriebsmotor angetrieben. Dem Kompressor 4 nachgeschaltet ist ein Vorrats-Druckbehälter 5. Über einen Verteiler 6 des Zugfahrzeuges gelangt die Druckluft zu den einzelnen Bremsen 7 des Zugfahrzeuges.

Das Zugfahrzeug 1 verfügt ferner über eine elektronische Bremsen-Steuerung (EBS) 8. Die elektronische Bremsen-Steuerung 8 ist über eine Signalleitung mit dem Verteiler 6 verbunden, und steuert auf diese Weise die Bremslastverteilung zu den einzelnen Bremsen. Weitere Signalleitungen können auch unmittelbar zu den einzelnen Bremsen 7 führen.

Auch das Anhängerfahrzeug 2 verfügt über druckluftbetätigte Bremsen 9, die über Leitungen 10 an einen zentralen Verteiler 11 angeschlossen sind. Auch der Verteiler 11 bzw. die einzelnen Bremsen 9 sind über Signalleitungen 12 mit einer direkt dem Anhänger zugewiesenen und darin untergebrachten Bremsen-Steuereinrichtungen (EBS) 13 verbunden. Eine weitere Signalleitung 14 verbindet die Bremsen-Steuereinrichtungen 13 des Anhängerfahrzeuges mit der Bremsen-Steuereinrichtung 8 des Zugfahrzeuges.

Beim Ankoppeln des Anhängerfahrzeuges an das Zugfahrzeug wird die Signalleitung 14 geschlossen. Ebenso wird eine Druckluft-Versorgungsleitung 15 geschlossen, welche von dem Druckluftsystem des Zugfahrzeuges 1 zu dem Druckluftsystem des Anhängerfahrzeuges 2 führt und dort den Vorrats-Druckbehälter 5' versorgt.

Die Druckluft-Versorgungsleitung 15 führt über eine in dem Zugfahrzeug 1 angeordnete Drossel bzw. ein Reduzierventil 16. Das Reduzierventil 16 ist zwischen einer ersten Stellung, in der der volle Systemdruck des Zugfahrzeuges 1 über die Druckluft-Versorgungsleitung 15 zu dem Anhängerfahrzeug gelangt, und einer zweiten Stellung umschaltbar, wobei in der zweiten Stellung eine Drosselung erfolgt, so daß der über die Druckluft-Versorgungsleitung 15 zu dem Anhänger gelangende Druckwert geringer ist, als der Druckwert des Systemdrucks im Zugfahrzeug. Die Umschaltung des Reduzierventils 16 zwischen seiner ersten und seiner zweiten Stellung erfolgt über ein entsprechendes Betätigungssignal der Bremsen-Steuereinrichtung. Bei dem dargestellten Ausführungsbeispiel gelangt dieses Betätigungssignal von der Bremsen-Steuereinrichtung 8 des Zugfahrzeuges zu dem Reduzierventil 16. Es ist jedoch auch möglich, das Betätigungssignal für das Reduzierventil 16 über die Signalleitung 14 unmittelbar von der Bremsen-Steuereinrichtung 13 des Anhängers abzugeben.

Der Vorrats-Druckbehälter 5' des Anhängerfahrzeugs 2 verfügt über weitere Ausgänge 17a, 17b zur Versorgung weiterer Druckluftaggregate. Vorzugsweise ist das Anhängerfahrzeug 2 mit einer Luftfederung versehen. Über die Ausgänge 17a, 17 b kann daher die Versorgung der Luftfederbälge der Luftfederung mit Druckluft erfolgen. Alternativ oder ergänzend zu der Luftfederung können die Ausgänge des Verteilers 11 auch zu den Reifen des Anhängerfahrzeuges führen, um das geforderte Luftdruckniveau in den Reifen aufrechtzuerhalten oder im Falle eines Druckverlustes auszugleichen. Nach dem Ankoppeln des Anhängerfahrzeuges an das Zugfahrzeug werden mittels entsprechender Stecksysteme auch die Signalleitung 14 sowie die Druckluft-Versorgungsleitung 15 angekoppelt. Sodann gibt die Bremsen-Steuereinrichtung 13 ein Identifikationssignal ab, welches über die geschlossene Signalleitung 14 zu der Bremsen-Steuereinrichtung 8 des Zugfahrzeuges gelangt. Anhand des Identifikationssignals erkennt die Bremsen-Steuereinrichtung 8, ob es sich bei dem angekoppelten Anhängerfahrzeug um einen Anhängertyp mit einem Systemdruck von z. B. 8,5 bar oder einem Systemdruck von z. B. 10 bar handelt. In Abhängigkeit von dem Ergebnis der so erfolgten Identifikation wird sodann das Reduzierventil 16 in eine seiner zumindest zwei möglichen Einstellungen eingestellt. Arbeitet z. B. das Zugfahrzeug mit einem Systemdruck von 10 bar, wird, sofern das Anhängerfahrzeug nur für 8,5 bar ausgelegt ist, das Reduzierventil 16 auf Druckreduzierung geschaltet, so daß über die Druckluft-Versorgungsleitung 15 nur 8,5 bar zu dem Anhängerfahrzeug gelangen. Ist das Anhängerfahrzeug hingegen mit einem Hochdruck-System ausgestattet, wird das Reduzierventil 16 durch ein entsprechendes Signal der Bremsen-Steuereinrichtung 8 vollständig geöffnet, so daß der Zugfahrzeug-Systemdruck von 10 bar auch der Systemdruck im Anhängerfahrzeug ist.

Ein solcher hoher Systemdruck bietet nicht nur bei Zugfahrzeugen, sondern auch bei Anhängerfahrzeugen beträchtliche Vorteile. So läßt sich die Bremssicherheit durch Verkürzung der Ansprechzeiten sowie die Verbesserung des Antiblockiersystems der Bremse erhöhen. Druckluftsysteme mit höheren Druckwerten arbeiten außerdem geringerem Energieverbrauch. Im Falle der Ausrüstung des Anhängerfahrzeuges mit einer Luftfederung läßt sich die Größe der Luftfederbälge gegenüber einer Niedrigdruckbremsanlage verkleinern. Ferner ermöglichen erhöhte Druckwerte die Installierung einer Reifendruck-Regelanlage.

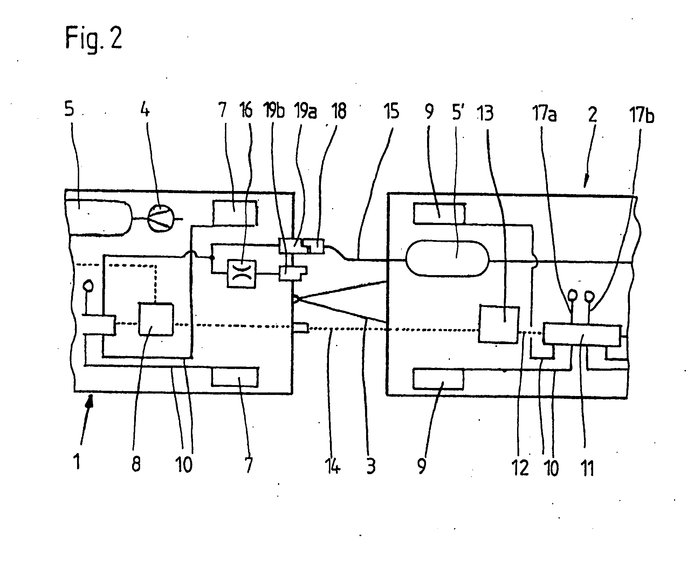

Bei der alternativen Ausführungsform gemäß Fig. 2 ist die Druckluft-Versorgungsleitung 15 auf Seiten des Zugfahrzeuges 1 in zwei unterschiedliche Stränge aufgeteilt. Der erste Strang, welcher in einem Anschlußstecker 19 a endet, ist frei von irgendwelchen, den Druck beeinflussenden Einrichtungen. Der zweite Strang hingegen, welcher in dem Anschlußstecker 19 b endet, weist ein Reduzierventil 16 auf, dessen Druckreduktion fest eingestellt ist. Auf diese Weise liegt an dem Anschlußstecker 19 b ein anderer, nämlich niedrigerer Druckwert an, als an dem anderen Anschlußstecker 19 a.

Die Identifizierung des jeweiligen Anhängerfahrzeuges 2 erfolgt dadurch, daß ein Anschlußstecker 18 des Anhängerfahrzeuges 2 nur an einen der beiden Anschlußstecker 19 a, 19 b des Zugfahrzeuges 1 paßt. Dies kann z. B. durch entsprechende Anordnung oder Größe der Anschlußverbindung erreicht werden oder auch z. B. durch Variation in der Drehlage der Anschlußverbindung. Bei dem in Figur 2 dargestellten Ausführungsbeispiel paßt der Anschluß 18 des Anhängerfahrzeuges lediglich zu dem Anschluß 19 a, nicht hingegen zu dem Anschluß 19 b. Das Anhängerfahrzeug wird in diesem Fall als Fahrzeug indentifiziert, welches mit dem höheren der beiden Betriebsdrücke betreibbar ist.

### Bezugszeichenliste

- 1: Zugfahrzeug
- 2: Anhängerfahrzeug
- 3: Deichsel
- 4: Kompressor
- 5: Vorrats-Druckbehälter
- 5': Vorrats-Druckbehälter
- 6: Verteiler
- 7: Bremse
- 8: Bremsen-Steuereinrichtung
- 9: Bremse
- 10: Leitung
- 11: Verteiler
- 12: Signalleitung
- 13: Bremsen-Steuereinrichtung
- 14: Signalleitung
- 15: Druckluft-Versorgungsleitung
- 16: Reduzierventil, einstellbare Drossel
- 17a: zusätzlicher Ausgang
- 17b: zusätzlicher Ausgang
- 18: Anschlußstecker
- 19 a: Anschlußstecker
- 19 b: Anschlußstecker

## Patentansprüche

1. Verfahren zum Betrieb einer druckluftbetriebenen Bremsanlage eines Fahrzeugverbandes aus einem Zugfahrzeug (1) und einem hieran angekoppelten Anhängerfahrzeug (2), dessen Druckluftsystem mit dem Druckluftsystem des Zugfahrzeuges über eine Druckluft-Versorgungsleitung (15) verbunden ist, deren Druck auf einen ersten festen sowie mindestens einen zweiten festen Druckwert einstellbar ist, wobei Mittel zur Identifizierung des Anhängerfahrzeuges vorhanden sind, und der Druckwert in der Druckluft-Versorgungsleitung von dem Ergebnis der Identifizierung abhängt,
**dadurch gekennzeichnet,**
**dass** das Anhängerfahrzeug durch das Zugfahrzeug identifiziert wird, und dass durch die Umschaltmittel eine Einstellung des Druckwertes in der Druckluft-Versorgungsleitung in Abhängigkeit von dem Ergebnis der Identifizierung erfolgt.

2. Verfahren nach Anspruch 1, **dadurch gekennzeichnet, dass** die Identifikation anhand eines Identifikationssignals erfolgt, das zwischen einer Bremsen-Steuereinrichtung in dem Zugfahrzeug und einer weiteren Bremsen-Steuereinrichtung in dem Anhängerfahrzeug übermittelt wird.

3. Verfahren nach Anspruch 2, **dadurch gekennzeichnet, dass** die Bremsen-Steuereinrichtung des Anhängerfahrzeuges das Identifikationssignal an die Bremsen-Steuereinrichtung des Zugfahrzeuges übermittelt.

4. Verfahren nach einem der Ansprüche 1 bis 3, **dadurch gekennzeichnet, dass** im Falle des Eintreffens eines Identifikationssignals im Zugfahrzeug der höhere Druckwert, und im Falle des Ausbleibens eines Identifikationssignals der niedrigere Druckwert eingestellt wird.

5. Zugfahrzeug mit einer druckluftbetriebenen Bremsanlage, die über eine Druckluft-Versorgungsleitung (15) mit einem Druckluftsystem eines an das Zugfahrzeug (1) ankoppelbaren Anhängerfahrzeuges (2) verbindbar ist, und mit Umschaltmitteln (16) zur wahlweisen Festlegung des Drucks in der Druckluft-Versorgungsleitung (15) auf einen ersten oder mindestens einen zweiten Druckwert sowie Mitteln zur Identifizierung des Anhängerfahrzeuges (2),
**gekennzeichnet durch**
Umschaltmittel, **durch** die eine Einstellung des Druckwertes in der Druckluft-Versorgungsleitung in Abhängigkeit von der Identifizierung des Anhängerfahrzeuges durch das Zugfahrzeug erfolgt.

6. Zugfahrzeug nach Anspruch 5, **dadurch gekennzeichnet, dass** mit den Umschaltmitteln (16) der Druck in der Druckluft-Versorgungsleitung (15) auf zwei unterschiedliche Werte einstellbar ist.

7. Zugfahrzeug nach Anspruch 6, **dadurch gekennzeichnet, dass** dieses mit einer Bremsen-Steuereinrichtung (8) versehen ist, die über eine Signalleitung (14) mit einer Bremsen-Steuereinrichtung (13) des Anhängerfahrzeuges (2) verbindbar ist, und dass die Identifikation des Anhängerfahrzeuges (2) durch ein Identifikationssignal in der Signalleitung (14) erfolgt.

## Claims

1. Method for operating a compressed air brake system of a vehicle combination consisting of a towing vehicle (1) and a trailer vehicle (2) which is coupled thereto and the compressed air system of which is connected to the compressed air system of the towing vehicle via a compressed air supply line (15), the pressure of which can be set to a first fixed and also at least one second fixed pressure value, wherein means are provided for identifying the trailer vehicle, and the pressure value in the compressed air supply line depends on the result of the identification, **characterised in that** the trailer vehicle is identified by the towing vehicle, and **in that** the setting of the pressure value in the compressed air supply line takes place via the switching means as a function of the result of the identification.

2. Method according to claim 1, **characterised in that** the identification takes place on the basis of an identification signal which is transmitted between a brake control device in the towing vehicle and a further brake control device in the trailer vehicle.

3. Method according to claim 2, **characterised in that** the brake control device of the trailer vehicle transmits the identification signal to the brake control device of the towing vehicle.

4. Method according to one of claims 1 to 3, **characterised in that** the higher pressure value is set if an identification signal arrives in the towing vehicle and the lower pressure value is set if an identification signal fails to arrive.

5. Towing vehicle comprising a compressed air brake system which can be connected via a compressed air supply line (15) to a compressed air system of a trailer vehicle (2) which can be coupled to the towing vehicle (1), and comprising switching means (16) for selectively fixing the pressure in the compressed air supply line (15) at a first or at least one second pressure value and also means for identifying the trailer vehicle (2), **characterised by** switching means via which a setting of the pressure value in the compressed air supply line takes place as a function of the identification of the trailer vehicle by the towing vehicle.

6. Towing vehicle according to claim 5, **characterised in that** the pressure in the compressed air supply line (15) can be set to two different values by the switching means (16).

7. Towing vehicle according to claim 6, **characterised in that** it is provided with a brake control device (8) which can be connected via a signal line (14) to a brake control device (13) of the trailer vehicle (2), and **in that** the identification of the trailer vehicle (2) takes place via an identification signal in the signal line (14).

## Revendications

1. Procédé permettant de faire fonctionner un système de freinage à air comprimé d'un ensemble de véhicules formé d'un tracteur (1) et d'une remorque (2) qui y est accouplée dont le système d'air comprimé est relié au système d'air comprimé du tracteur par le biais d'une conduite d'alimentation en air comprimé (15) dont la pression peut être réglée sur une première valeur de pression fixe ainsi qu'au moins une deuxième valeur de pression fixe, des moyens d'identification de la remorque étant disponibles et la valeur de pression dans la conduite d'alimentation en air comprimé dépendant du résultat de l'identification,
**caractérisé en ce**
**que** la remorque est identifiée par le tracteur, et en ce que les moyens de commutation permettent un réglage de la valeur de pression dans la conduite d'alimentation en air comprimé en fonction du résultat de l'identification.

2. Procédé selon la revendication 1, **caractérisé en ce que** l'identification se fait à l'aide d'un signal d'identification, qui est transmis entre un dispositif de commande des freins dans le tracteur et un autre dispositif de commande des freins dans la remorque.

3. Procédé selon la revendication 2 **caractérisé en ce que** le dispositif de commande des freins de la remorque transmet le signal d'identification au dispositif de commande des freins du tracteur.

4. Dispositif selon l'une quelconque des revendications 1 à 3, **caractérisé en ce que** dans le cas de l'arrivée d'un signal d'identification dans le tracteur, la valeur de pression la plus élevée est réglée, et dans le cas de l'absence d'un signal d'identification, la valeur de pression la plus faible est réglée.

5. Tracteur avec un système de freinage à air comprimé, qui peut être relié par le biais d'une conduite d'alimentation en air comprimé (15) avec un système à air comprimé d'une remorque (2) pouvant être accouplée au tracteur (1) et avec des moyens de commutation (16) pour fixer au choix la pression dans la conduite d'alimentation en air comprimé (15) sur une première ou au moins une deuxième valeur de pression ainsi que des moyens d'identification de la remorque (2), **caractérisé par** les moyens de commutation, par lesquels un réglage de la valeur de pression dans la conduite d'alimentation en air comprimé se fait en fonction de l'identification de la remorque par le tracteur.

6. Tracteur selon la revendication 5, **caractérisé en ce que** la pression dans la conduite d'alimentation en air comprimé (15) peut être réglée sur deux valeurs différentes avec les moyens de commutation (16).

7. Tracteur selon la revendication 6, **caractérisé en ce que** celui-ci peut être doté d'un dispositif de commande des freins (8), qui peut être relié à un dispositif de commande des freins (13) de la remorque (2) par le biais d'une ligne de signalisation (14) et **en ce que** l'identification de la remorque (2) se fait par un signal d'identification dans la ligne de signalisation (14).
